# EUROPÄISCHE PATENTSCHRIFT

(11) **EP 4 278 110 B1**
(45) Veröffentlichungstag und Bekanntmachung des Hinweises auf die Patenterteilung: **27.11.2024**
(21) Anmeldenummer: 21843648.3
(22) Anmeldetag: 20.12.2021
(51) Int. Cl.: F16D 65/00, F16D 55/226

(54) **SCHEIBENBREMSANORDNUNG UND BREMSSTAUBPARTIKELFILTER**
DISC BRAKE ASSEMBLY AND BRAKE DUST PARTICLE FILTER
ENSEMBLE DE FREIN À DISQUE ET FILTRE À PARTICULES DE POUSSIÈRE DE FREIN

(30) Priorität: 14.01.2021 DE 102021200322
(43) Veröffentlichungstag der Anmeldung: 22.11.2023
(73) Patentinhaber: MANN+HUMMEL GmbH, 71636 Ludwigsburg (DE); VOLKSWAGEN AKTIENGESELLSCHAFT, 38440 Wolfsburg (DE)
(72) Erfinder: WÖRZ, Tobias, 71397 Leutenbach (DE); WELLER, Benedikt, 71711 Steinheim (DE); MACK, Klaus, 74239 Hardthausen (DE); GEHWOLF, Klaus, 94437 Mamming (DE); ROCKINGER, Theodor, 84163 Marklkofen (DE); PFANNKUCH, Steffen, 71636 Ludwigsburg (DE); BOCK, Lukas, 74321 Bietigheim-Bissingen (DE); KAUFMANN, Karl-Friedrich, 38518 Gifhorn (DE)
(74) Vertreter: Maiwald GmbH
(86) Internationale Anmeldenummer: PCT/EP2021/086806
(87) Internationale Veröffentlichungsnummer: WO 2022/152517

(56) Entgegenhaltungen:
- WO-A1-2019/048377
- DE-A1- 102009 021 203
- DE-A1- 102010 053 879
- US-A1- 2010 065 387

## Beschreibung

### Technisches Gebiet

Die Erfindung betrifft eine Scheibenbremsanordnung aufweisend eine Bremsscheibe und eine Bremssattelbaugruppe mit einem Bremssattel. Die Erfindung betrifft ferner einen Bremsstaubpartikelfilter.

### Stand der Technik

Abrieb von Bremsen, sog. Bremsstaub, trägt zum Eintrag von Feinstaub in die Umwelt durch Kraftfahrzeuge bei. Der Abrieb besteht dabei insbesondere aus Partikeln, die von einer Bremsscheibe und Bremsbelägen abgerieben wurden. Neben der Umweltbelastung führt Bremsstaub zu hartnäckigen Verschmutzungen, welche die Funktion der Bremse und von an die Bremse angrenzenden Bauteilen beeinträchtigen können. Insbesondere auf Leichtmetallfelgen werden Ablagerungen von Bremsstaub zudem als ästhetisch störend empfunden.

Aus DE 10 2010 053 879 A1 ist eine Sammelvorrichtung für Bremsstaub einer Scheibenbremse bekannt. Die Scheibenbremse weist eine Bremsscheibe, einen Bremssattel und zumindest einen Bremsbelag auf. Der Bremsbelag weist eine Kapselung auf, die den Bremsbelag zumindest zum Teil umgibt. Die Kapselung weist eine Kammer auf, in welche Bremsstaub bei einem Bremsvorgang geleitet werden kann, so dass er sich dort ablagert. Ferner zeigen US 2010/065387 A1 und DE 10 2009 021203 A1 Bremsscheibenanordnungen mit Bremsstaubfiltern.

Es ist eine Aufgabe der Erfindung, den Eintrag von Bremsstaub in eine Umgebung einer Scheibenbremse zu verringern.

### Offenbarung der Erfindung

Die Aufgabe wird durch eine Scheibenbremsanordnung mit den in Anspruch 1 angegebenen Merkmalen sowie einen Bremsstaubpartikelfilter gemäß Anspruch 13 gelöst. Bevorzugte Ausführungsformen sind in den jeweiligen Unteransprüchen und der Beschreibung angegeben.

Erfindungsgemäß ist eine Scheibenbremsanordnung vorgesehen. Die Scheibenbremsanordnung weist eine Bremsscheibe und eine Bremssattelbaugruppe mit einem Bremssattel auf. Richtungsangaben wie radial, axial oder in Umfangsrichtung beziehen sich auf eine Drehachse der Bremsscheibe. Der Bremssattel umgreift die Bremsscheibe bereichsweise. Die Bremssattelbaugruppe weist typischerweise ferner wenigstens zwei Bremsbeläge auf, die auf unterschiedlichen Seiten der Bremsscheibe angeordnet sind. Die Bremsbeläge können durch wenigstens einen Bremskolben des Bremssattels gegen einen Reibring der Bremsscheibe gepresst werden.

Erfindungsgemäß weist die Scheibenbremsanordnung ferner einen Bremsstaubpartikelfilter mit einem Filtergehäuse und einem Filtermedium auf. Das Filtergehäuse kann die Bremsscheibe abschnittsweise umgreifen. Insbesondere kann das Filtergehäuse im Querschnitt U-förmig ausgebildet sein. Das Filtergehäuse und der Bremssattel können voneinander separate Bauteile sein. Das Filtermedium dient zum Zurückhalten und Sammeln von Bremsstaubpartikeln. Das Filtermedium ist abschnittsweise in dem Filtergehäuse angeordnet.

Der Bremsstaubpartikelfilter kann ein unten beschriebener, erfindungsgemäßer Bremsstaubpartikelfilter sein. Merkmale des erfindungsgemäßen Bremsstaubpartikelfilters können bei dem Bremsstaubpartikelfilter der erfindungsgemäßen Scheibenbremsanordnung vorgesehen sein.

Weiter erfindungsgemäß steht das Filtermedium in Umfangsrichtung der Bremsscheibe über das Filtergehäuse über und liegt an der Bremssattelbaugruppe an. Insbesondere kann das Filtermedium einen Spalt zwischen dem Filtergehäuse und der Bremssattelbaugruppe überbrücken. Der überstehende Abschnitt des Filtermediums kann einen mit Bremsstaubpartikeln beladenen Luftstrom aus dem Bremssattel in das Filtergehäuse leiten. In dem Filtergehäuse können die Bremsstaubpartikel besonders wirkungsvoll in dem Filtermedium abgeschieden werden. Im Bereich des Überstands des Filtermediums können keine Bremsstaubpartikel zwischen dem Filtergehäuse und der Bremssattelbaugruppe in die Umgebung entweichen. Der an der Bremssattelbaugruppe dichtend anliegende Überstand des Filtermediums über das Filtergehäuse hinaus bewirkt eine Erhöhung des Abscheidegrads des Bremsstaubpartikelfilters, da die Abdichtung der Schnittstelle verbessert ist und daher weniger abzuscheidende Partikel in die Umgebung gelangen. Die erfindungsgemäße Scheibenbremsanordnung gibt nur in einem äußerst geringen Maße mit Bremsstaubpartikel in ihre Umgebung ab.

Das Filtermedium kann in Umfangsrichtung überlappend an der Bremssattelbaugruppe anliegen. Mit anderen Worten können das Filtermedium und die Bremssattelbaugruppe bei Blick in radialer Richtung übereinanderliegend angeordnet sein, wobei sie sich in den übereinanderliegenden Bereichen zumindest abschnittsweise berühren. Dadurch kann eine besonders wirksame Abdichtung des Filtergehäuses gegenüber der Bremssattelbaugruppe erreicht werden.

Es kann vorgesehen sein, dass das Filtermedium unter elastischer Vorspannung an der Bremssattelbaugruppe anliegt. Die elastische Vorspannung verhindert bei Vibrationen, etwa während der Fahrt eines Kraftfahrzeugs mit der Scheibenbremsanordnung, ein Abheben des Filtermediums von der Bremssattelbaugruppe. Dadurch wird ein Eintrag von Bremsstaubpartikeln in eine Umgebung der Scheibenbremsanordnung besonders wirkungsvoll verringert.

Alternativ oder zusätzlich kann vorgesehen sein, dass das Filtermedium durch die Anlage an der Bremssattelbaugruppe plastisch verformt ist. Durch die plastische Verformung kann das Filtermedium, insbesondere auch über größere Längenabschnitte, an einer Kontur der Bremssattelbaugruppe anliegen. Auch dies verringert einen ungewünschten Austritt von Bremsstaubpartikeln. Auch bei einer plastischen Verformung des Filtermediums ist typischerweise eine zusätzliche elastische Vorspannung des Filtermediums gegen die Bremssattelbaugruppe vorgesehen, um die gegenseitige Anlage zu gewährleisten.

Besonders bevorzugt erstreckt sich das Filtermedium über einen Umfangsabschnitt einer Mantelfläche der Bremsscheibe. Das Filtermedium übergreift mit anderen Worten einen radial außen liegenden Mantelabschnitt der Bremsscheibe bogenförmig. Durch die Drehung der Bremsscheibe entsteht typischerweise eine nach radial außen gerichtete Luftströmung, so dass besonders viele Bremsstaubpartikel am Außenumfang der Bremsscheibe zurückgehalten werden können. Bevorzugt kann eine Umfangswand des Filtergehäuses zumindest teilweise mit dem Filtermedium ausgekleidet sein.

Alternativ oder zusätzlich kann sich das Filtermedium in radialer Richtung, vorzugsweise beidseitig, an der Bremsscheibe erstrecken. Das Filtermedium erstreckt sich mit anderen Worten über eine oder beide Reibflächen des Reibrings der Bremsscheibe. In einer besonderen Ausführungsform können einander abgewandte Seitenwände des Filtergehäuses mit dem Filtermedium ausgekleidet sein.

In einer bevorzugten Ausführungsform kann vorgesehen sein, dass das Filtermedium über eine der Bremssattelbaugruppe zugewandte Endkante der Umfangswand und/ oder zumindest einer der Seitenwände des Filtergehäuses übersteht. Bei einem Überstand an der Endkante der Umfangswand ergibt sich die hierin bereits beschriebene Überlappung mit der Bremssattelbaugruppe in radialer Richtung. Wenn das Filtermedium über die Endkante zumindest einer der Seitenwände übersteht erfolgt die Überlappung mit der Bremssattelbaugruppe in axialer Richtung. Es kann vorteilhaft auch vorgesehen sein, dass das Filtermedium sowohl über die Endkante der Umfangswand als auch über die Endkante zumindest einer der Seitenwände übersteht, da hierdurch die Abdichtung der Bremssattelschnittstelle weiter verbessert wird.

In einer weiteren Ausführungsform kann das Filtergehäuse ringsegmentförmig ausgebildet sein und einen Aufnahmebereich aufweisen, mit dem es die Bremsscheibe in einem vorbestimmten Winkelbereich umgreift. Der der vorbestimmte Winkelbereich kann zumindest 20°, insbesondere zumindest 30°, beispielsweise zumindest 40° des Bremsscheibenumfangs betragen. Das Filtergehäuse umgreift bevorzugt die Bremsscheibe beidseitig, d.h. auf Seite beider Reiboberflächen. Das Filtergehäuse kann zu diesem Zweck im Längsschnitt (bezogen auf eine Rotationsachse der Bremsscheibe) eine im Wesentlichen U-förmige Gestalt aufweisen.

Die Bremssattelbaugruppe kann einen Bremssattelhalter aufweisen, an dem der Bremssattel gehalten ist. Der Bremssattel kann an dem Bremssattelhalter in axialer Richtung verschieblich sein. Der Bremssattel kann mit anderen Worten als ein Schwimmsattel ausgebildet sein. Das Filtermedium kann an dem Bremssattelhalter anliegen. Insbesondere wenn der Bremssattelhalter einen in Drehrichtung der Bremsscheibe hinter dem Bremssattel liegenden Halteabschnitt aufweist, an dem das Filtermedium anliegt, kann dadurch die staubdichte Ankopplung des Bremsstaubpartikelfilters an die Bremssattelbaugruppe verbessert werden. An dem Halteabschnitt des Bremssattelhalters kann sich ein Bremsbelag abstützen. Der Bremssattelhalter und der Bremssattel sind grundsätzlich voneinander separate Bauteile. Der Bremssattelhalter und das Filtergehäuse können voneinander separate Bauteile sein.

Alternativ oder zusätzlich zur Anlage an dem Bremssattelhalter kann vorgesehen sein, dass das Filtermedium an dem Bremssattel anliegt. Dadurch kann auch einen Spalt zwischen dem Bremssattel und dem Filtergehäuse bzw. einem Bremssattelhalter durch das Filtermedium überdeckt werden. Insbesondere kann das Filtermedium unmittelbar an dem Bremssattel anliegen, wenn der Bremssattel ein Festsattel ist, und die Bremssattelbaugruppe keinen separaten Bremssattelhalter aufweist.

Die Bremsscheibe kann eine innenbelüftete Bremsscheibe sein. Dadurch kann die thermische Belastbarkeit der Scheibenbremsanordnung verbessert werden.

Das Filtergehäuse kann wenigstens eine Entlüftungsöffnung aufweisen. Durch die Drehung der Bremsscheibe in das Filtergehäuse geförderte Luft kann durch die Entlüftungsöffnungen aus dem Filtergehäuse entweichen. Dies vermeidet, dass Luft mit Bremsstaubpartikeln an dem Bremsstaubpartikelfilter vorbeiströmt.

Vorzugsweise eröffnet die wenigstens eine Entlüftungsöffnung das Filtergehäuse in radialer Richtung. Mit anderen Worten ermöglicht die Entlüftungsöffnung ein Ausströmen von Luft aus dem Filtergehäuse von der Mantelfläche am Außenumfang der Bremsscheibe weg. Insbesondere eine innenbelüftete Bremsscheibe bewirkt eine Förderung von Luft nach radial außen.

Besonders bevorzugt ist die wenigstens eine Entlüftungsöffnung von dem Filtermedium überdeckt. Die in der das Filtergehäuse durchströmenden Luft mitgeführten Bremsstaubpartikel können dadurch in dem Bremsstaubpartikelfilter zurückgehalten werden.

Ebenfalls in den Rahmen der vorliegenden Erfindung fällt ein Kraftfahrzeug mit einer erfindungsgemäßen Scheibenbremsanordnung. Die Bremsscheibe kann an einer Radnabe des Kraftfahrzeugs gehalten sein. Die Bremssattelbaugruppe, insbesondere ein Bremssattelhalter der Bremssattelbaugruppe, kann an einem Radträger des Kraftfahrzeugs gehalten sein.

In den Rahmen der vorliegenden Erfindung fällt ferner ein Bremsstaubpartikelfilter für eine oben beschriebene, erfindungsgemäße Scheibenbremsanordnung. Merkmale des Bremsstaubpartikelfilters der erfindungsgemäßen Scheibenbremsanordnung können bei dem erfindungsgemäßen Bremsstaubpartikelfilter vorgesehen sein.

Der erfindungsgemäße Bremsstaubpartikelfilter weist ein Filtergehäuse und ein abschnittsweise in dem Filtergehäuse angeordnetes Filtermedium auf. Erfindungsgemäß steht das Filtermedium in Umfangsrichtung über das Filtergehäuse über. Der Überstand des Filtermediums ermöglicht es, dass Filtergehäuse dicht an eine Bremssattelbaugruppe anzuschließen, wobei der Überstand des Filtermediums an der Bremssattelbaugruppe zur Anlage kommt.

Das Filtermedium kann ein Metallfaservlies aufweisen, insbesondere als ein Metallfaservlies ausgebildet sein. Ein Metallfaservlies weist eine hohe Temperaturbeständigkeit auf. Es widersteht dadurch den an einer Scheibenbremse auftretenden Temperaturen. Ferner erlaubt es ein Metallfaservlies, Bremsstaubpartikel wirkungsvoll aus einem Luftstrom abzuschneiden. Ein Metallfaservlies kann zudem eine große Menge von Bremsstaubpartikeln aufnehmen. Alternativ oder zusätzlich kann das Filtermedium auch andere temperaturbeständige Werkstoffe aufweisen oder aus ihnen bestehen, etwa einem Glasfaservlies und/oder Keramikfaservlies

Das Filtermedium kann in der Umfangsrichtung wenigstens 3 mm, bevorzugt wenigstens 10 mm, besonders bevorzugt wenigstens 15 mm, über das Filtergehäuse überstehen. Dies ermöglicht eine zuverlässig bremsstaubpartikeldichte Anbindung des Filtergehäuses an eine Bremssattelbaugruppe.

### Kurze Beschreibung der Zeichnungen

Weitere Merkmale und Vorteile der Erfindung ergeben sich aus der nachfolgenden detaillierten Beschreibung eines Ausführungsbeispiels der Erfindung, aus den Patentansprüchen sowie anhand der Figuren der Zeichnung, die erfindungsgemäße Einzelheiten zeigen. Die zuvor genannten und noch weiter ausgeführten Merkmale können je einzeln für sich oder zu mehreren in beliebigen, zweckmäßigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können. In der Zeichnung zeigen:
- Fig. 1: eine erfindungsgemäße Scheibenbremsanordnung mit einem erfindungsgemäßen Bremsstaubpartikelfilter, wobei ein Filtermedium aus einem Filtergehäuse herausragt und an einem Bremssattelhalter anliegt, in einer schematischen Perspektivansicht;
- Fig. 2: die Scheibenbremsanordnung von Figur 1 in einer schematischen Schnittansicht.

### Ausführungsformen der Erfindung

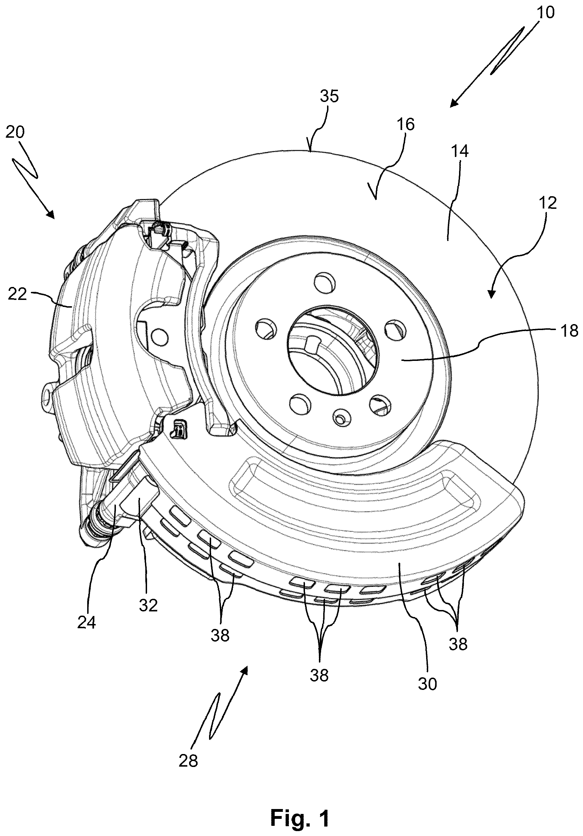

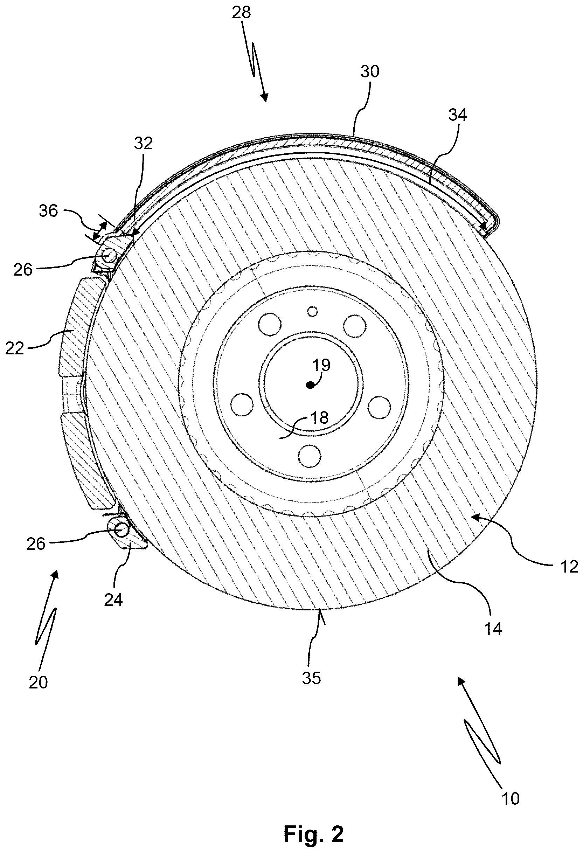

**Figur 1** zeigt eine Scheibenbremsanordnung **10** in einer schematischen Perspektivansicht. Die Scheibenbremsanordnung 10 weist eine Bremsscheibe **12** auf. Die Bremsscheibe 12 ist mit einem Reibring **14** mit zwei gegenüberliegenden Reibflächen **16,** von denen in Figur 1 nur eine zu sehen ist, und einem Aufnahmeabschnitt **18** zur Befestigung der Bremsscheibe 12 an einer Radnabe (nicht dargestellt) ausgebildet. In **Figur 2** ist die Scheibenbremsanordnung 10 in einem schematischen Schnitt mit Verlauf der Schnittebene durch den Reibring 14 der Bremsscheibe 12 dargestellt. Die Bremsscheibe 12 ist um eine Drehachse **19** drehbar. Die Bremsscheibe 12 kann zur Innenbelüftung mit nicht näher dargestellten Belüftungskanälen in dem Reibring 14 ausgebildet sein.

Die Scheibenbremsanordnung 10 weist eine Bremssattelbaugruppe **20** auf. Die Bremssattelbaugruppe 20 umfasst einen Bremssattel **22** und einen Bremssattelhalter **24.** Der Bremssattel 22 ist an dem Bremssattelhalter 24 gehalten. Vorliegend ist der Bremssattel 22 als ein Schwimmsattel ausgebildet. Der Bremssattel 22 ist über Gleitbolzen **26,** vergleiche Figur 2, in axialer Richtung verschieblich an dem Bremssattelhalter 24 geführt. Der Bremssattelhalter 24 dient zur Befestigung der Bremssattelbaugruppe 20 an einem nicht dargestellten Radträger.

Die Scheibenbremsanordnung 10 weist ferner einen Bremsstaubpartikelfilter **28** auf. Der Bremsstaubpartikelfilter 28 umfasst ein Filtergehäuse **30** und ein Filtermedium **32.** Das Filtermedium 32 kann ein Metallfaservlies sein. Das Filtermedium 32 ist abschnittsweise in dem Filtergehäuse 30 angeordnet. Das Filtergehäuse 30 kann im Querschnitt U-förmig ausgebildet sein. Das Filtergehäuse 30 erstreckt sich hier über einen Umfangsabschnitt **34** (vergleiche Figur 2) einer Mantelfläche **35** über der Bremsscheibe 12 und umgreift (mit den Schenkeln seines U-förmigen Querschnitts) die Reibflächen 16 des Reibrings 14 (vergleiche Figur 1).

Das Filtermedium 32 erstreckt sich über den (radial außen liegenden) Umfangsabschnitt 34 an der Bremsscheibe 12. Das Filtermedium 32 überdeckt mit anderen Worten bereichsweise die Mantelfläche 35 der Bremsscheibe 12. Zusätzlich kann sich das Filtermedium 32 bereichsweise über die beiden Reibflächen 16 des Reibrings 14 erstrecken. Das Filtermedium 32 kann hierzu innerhalb des Filtergehäuses 30 U-förmig angeordnet sein.

Das Filtermedium 32 steht in Umfangsrichtung über das Filtergehäuse 30 über. Mit anderen Worten ragt das Filtermedium 32 in Umfangsrichtung aus dem Filtergehäuse 30 heraus. Eine Länge **36** des Überstands des Filtermediums 32, gemessen in der Umfangsrichtung (vergleiche Figur 2) kann wenigstens 12 mm betragen. Der Überstand des Filtermediums 32 ist vorliegend am außenumfangseitigen Teil des Filtermediums 32 ausgebildet; mit anderen Worten erstreckt sich der Überstand des Filtermediums 32 in Umfangsrichtung über die radial außen liegende Mantelfläche 35 der Bremsscheibe 12. Zusätzlich könnte vorgesehen sein, dass das Filtermedium 32 auch im Bereich der Reibflächen 16 über das Filtergehäuse 30 zu der Bremssattelbaugruppe 20 hin vorsteht (nicht näher dargestellt).

Der aus dem Filtergehäuse 30 ragende Abschnitt des Filtermediums 32 liegt an der Bremssattelbaugruppe 20 an. Hier liegt das Filterelement 32 an dem Bremssattelhalter 24 an. Das Filtermedium 32 überbrückt dabei einen Spalt zwischen dem Filtergehäuse 30 und dem Bremssattelhalter 24. Zur, vorzugsweise flächigen, Anlage an der Bremssattelbaugruppe 20 kann das Filterelement 32 elastisch und, insbesondere am Rand des Filtergehäuses 30, plastisch deformiert sein. Das Filtermedium 32 kann sich in der Umfangsrichtung über einen Teil der Bremssattelbaugruppe 20 hinweg erstrecken. Im dargestellten Ausführungsbeispiel überlappt das Filtermedium 32 den Bremssattelhalter 24 in der Umfangsrichtung.

Das Filtergehäuse 30 kann mehrere Entlüftungsöffnungen **38** aufweisen, vergleiche Figur 1. Die Entlüftungsöffnungen 38 sind vorliegend radial außen am Filtergehäuse 30 angeordnet. Die Entlüftungsöffnungen 38 ermöglichen ein Austreten eines Luftstroms aus dem Filtergehäuse 30, wobei der Luftstrom eine radiale Geschwindigkeitskomponente besitzt.

Die Entlüftungsöffnungen 38 sind von dem Filtermedium 32 überdeckt. Das Filtermedium 32 erstreckt sich an der Innenseite des Filtergehäuses 32 über die Entlüftungsöffnungen 38 hinweg. Mit dem Luftstrom, der - insbesondere durch die Belüftungskanäle der innenbelüfteten Bremsscheibe 12 - in das Filtergehäuse 30 gefördert wird, werden Bremsstaubpartikel mitgeführt. Die Entlüftungsöffnungen 38 ermöglichen es dem Luftstrom, aus dem Filtergehäuse 30 auszutreten. Das die Entlüftungsöffnungen 38 überdeckende Filtermedium 32 hält dabei die Bremsstaubpartikel zurück. Auf diese Weise werden die Bremsstaubpartikel in dem Bremsstaubpartikelfilter 28, genauer dessen Filtermedium 32, gesammelt. Die Führung des Luftstroms durch die Entlüftungsöffnungen 38 erhöht mithin den Abscheidegrad des Bremsstaubpartikelfilters 28.

### Bezugszeichenliste

Scheibenbremsanordnung **10**
Bremsscheibe **12**
Reibring **14**
Reibflächen **16**
Aufnahmeabschnitt **18**
Drehachse **19**
Bremssattelbaugruppe **20**
Bremssattel **22**
Bremssattelhalter **24**
Gleitbolzen **26**
Bremsstaubpartikelfilter **28**
Filtergehäuse **30**
Filtermedium **32**
Umfangsabschnitt **34**
Mantelfläche **35**
Länge **36** des Überstands
Entlüftungsöffnungen **38**

## Patentansprüche

1. Scheibenbremsanordnung (10) aufweisend
- eine Bremsscheibe (12),
- eine Bremssattelbaugruppe (20) mit einem Bremssattel (22), und
- einen Bremsstaubpartikelfilter (28) mit einem Filtergehäuse (30) und einem abschnittsweise in dem Filtergehäuse (30) angeordneten Filtermedium (32), **dadurch gekennzeichnet, dass**
das Filtermedium (32) in Umfangsrichtung der Bremsscheibe (12) über das Filtergehäuse (30) übersteht und dichtend an der Bremssattelbaugruppe (20) anliegt.

2. Scheibenbremsanordnung (10) nach Anspruch 1, **dadurch gekennzeichnet, dass** das Filtermedium (32) in Umfangsrichtung überlappend an der Bremssattelbaugruppe (20) anliegt.

3. Scheibenbremsanordnung (10) nach einem der vorhergehenden Ansprüche, **dadurch gekennzeichnet, dass** das Filtermedium (32) unter elastischer Vorspannung an der Bremssattelbaugruppe (20) anliegt.

4. Scheibenbremsanordnung (10) nach einem der vorhergehenden Ansprüche, **dadurch gekennzeichnet, dass** das Filtermedium (32) durch die Anlage an der Bremssattelbaugruppe (20) plastisch verformt ist.

5. Scheibenbremsanordnung (10) nach einem der vorhergehenden Ansprüche, **dadurch gekennzeichnet, dass** das Filtermedium (32) sich über einen Umfangsabschnitt (34) einer Mantelfläche (35) der Bremsscheibe (12) erstreckt, wobei bevorzugt eine Umfangswand des Filtergehäuses (30) zumindest teilweise mit dem Filtermedium (32) ausgekleidet ist.

6. Scheibenbremsanordnung (10) nach einem der vorhergehenden Ansprüche, **dadurch gekennzeichnet, dass** das Filtermedium (32) sich in radialer Richtung, vorzugsweise beidseitig, an der Bremsscheibe (12) erstreckt, wobei bevorzugt einander abgewandte Seitenwände des Filtergehäuses (30) zumindest teilweise mit dem Filtermedium (32) ausgekleidet sind.

7. Scheibenbremsanordnung (10) nach Anspruch 5 oder 6, **dadurch gekennzeichnet, dass** das Filtermedium (32) über eine der Bremssattelbaugruppe (20) zugewandte Endkante der Umfangswand und/oder zumindest einer der Seitenwände des Filtergehäuses (30) übersteht.

8. Scheibenbremsanordnung (10) nach einem der vorhergehenden Ansprüche, **dadurch gekennzeichnet, dass** das Filtergehäuse (30) ringsegmentförmig ist und einen Aufnahmebereich aufweist, mit dem es die Bremsscheibe in einem vorbestimmten Winkelbereich umgreift, wobei der vorbestimmte Winkelbereich bevorzugt zumindest 20°, stärker bevorzugt zumindest 30°, am meisten bevorzugt zumindest 40° des Bremsscheibenumfangs beträgt.

9. Scheibenbremsanordnung (10) nach einem der vorhergehenden Ansprüche, **dadurch gekennzeichnet, dass** die Bremssattelbaugruppe (20) einen Bremssattelhalter (24) aufweist, an dem der Bremssattel (22), vorzugsweise in axialer Richtung verschieblich, gehalten ist, wobei das Filtermedium (32) insbesondere an dem Bremssattelhalter (24) anliegt.

10. Scheibenbremsanordnung (10) nach einem der vorhergehenden Ansprüche, **dadurch gekennzeichnet, dass** das Filtermedium (32) an dem Bremssattel (22) anliegt.

11. Scheibenbremsanordnung (10) nach einem der vorhergehenden Ansprüche, **dadurch gekennzeichnet, dass** die Bremsscheibe (12) eine innenbelüftete Bremsscheibe (12) ist.

12. Scheibenbremsanordnung (10) nach einem der vorhergehenden Ansprüche, **dadurch gekennzeichnet, dass** das Filtergehäuse (30) wenigstens eine Entlüftungsöffnung (38) aufweist, vorzugsweise wobei die wenigstens eine Entlüftungsöffnung (38) das Filtergehäuse (30) in radialer Richtung eröffnet, wobei die wenigstens eine Entlüftungsöffnung (38) insbesondere von dem Filtermedium (32) überdeckt ist.

13. Bremsstaubpartikelfilter (28) für eine Scheibenbremsanordnung (10) nach einem der vorhergehenden Ansprüche, aufweisend ein Filtergehäuse (30) und ein abschnittsweise in dem Filtergehäuse (30) angeordnetes Filtermedium (32), **dadurch gekennzeichnet, dass** das Filtermedium (32) in Umfangsrichtung über das Filtergehäuse (30) übersteht.

14. Bremsstaubpartikelfilter (28) nach Anspruch 13, **dadurch gekennzeichnet, dass** das Filtermedium (32) ein Metallfaservlies, ein Glasfaservlies und/oder Keramikfaservlies aufweist oder daraus besteht.

15. Bremsstaubpartikelfilter (28) nach Anspruch 13 oder 14, **dadurch gekennzeichnet, dass** das Filtermedium (32) in der Umfangsrichtung wenigstens 3 mm, bevorzugt wenigstens 10 mm, besonders bevorzugt wenigstens 15 mm, über das Filtergehäuse (30) übersteht.

## Claims

1. A disc brake arrangement (10) comprising
- a brake disc (12),
- a brake calliper assembly (20) with a brake calliper (22), and
- a brake dust particle filter (28) with a filter housing (30) and a filter medium (32) arranged in sections in the filter housing (30),
**characterized in that** the filter medium (32) projects beyond the filter housing (30) in circumferential direction of the brake disc (12) and rests in a sealing manner against the brake calliper assembly (20).

2. The disc brake arrangement (10) according to claim 1, **characterized in that** the filter medium (32) overlaps the brake calliper assembly (20) in the circumferential direction.

3. The disc brake arrangement (10) according to any one of the preceding claims, **characterized in that** the filter medium (32) rests against the brake calliper assembly (20) under elastic prestress.

4. The disc brake arrangement (10) according to any one of the preceding claims, **characterized in that** the filter medium (32) is plastically deformed by the resting with the brake calliper assembly (20).

5. The disc brake arrangement (10) according to any one of the preceding claims, **characterized in that** the filter medium (32) extends over a circumferential section (34) of a circumferential surface (35) of the brake disc (12), preferably with a circumferential wall of the filter housing (30) being at least partially lined with the filter medium (32).

6. The disc brake arrangement (10) according to any one of the preceding claims, **characterized in that** the filter medium (32) extends in a radial direction, preferably on both sides, on the brake disc (12), wherein side walls of the filter housing (30) facing away from each other are preferably at least partially lined with the filter medium (32).

7. The disc brake arrangement (10) according to claim 5 or 6, **characterized in that** the filter medium (32) projects beyond an end edge of the circumferential wall and/or at least one of the side walls of the filter housing (30) facing the brake calliper assembly (20).

8. The disc brake arrangement (10) according to any one of the preceding claims, **characterized in that** the filter housing (30) is annular segment-shaped and has a receiving region with which it engages around the brake disc in a predetermined angular range, the predetermined angular range preferably being at least 20°, more preferably at least 30°, most preferably at least 40° of the brake disc circumference.

9. The disc brake arrangement (10) according to any one of the preceding claims, **characterized in that** the brake calliper assembly (20) has a brake calliper holder (24), on which the brake calliper (22) is held, preferably displaceably in the axial direction, the filter medium (32) resting in particular against the brake calliper holder (24).

10. The disc brake arrangement (10) according to any one of the preceding claims, **characterized in that** the filter medium (32) rests against the brake calliper (22).

11. The disc brake arrangement (10) according to any one of the preceding claims, **characterized in that** the brake disc (12) is an internally ventilated brake disc (12).

12. The disc brake arrangement (10) according to any one of the preceding claims, **characterized in that** the filter housing (30) has at least one venting opening (38), preferably wherein the at least one venting opening (38) opens the filter housing (30) in radial direction, wherein the at least one venting opening (38) is covered in particular by the filter medium (32).

13. A brake dust particle filter (28) for a disc brake arrangement (10) according to one of the preceding claims, comprising a filter housing (30) and a filter medium (32) arranged in sections in the filter housing (30), **characterized in that** the filter medium projects beyond the filter housing (30) in the circumferential direction.

14. The brake dust particle filter (28) according to claim 13, **characterized in that** the filter medium (32) comprises or consists of a metal fibre fleece, a glass fibre fleece and/or ceramic fibre fleece.

15. The brake dust particle filter (28) according to claim 13 or 14, **characterized in that** the filter medium (32) projects at least 3 mm, preferably at least 10 mm, particularly preferably at least 15 mm, beyond the filter housing (30) in the circumferential direction.

## Revendications

1. Agencement de frein à disque (10) comportant
- un disque de frein (12),
- un ensemble étrier de frein (20) avec un étrier de frein (22), et
- un filtre à particules de poussière de frein (28) avec un boîtier de filtre (30) et un milieu filtrant (32) disposé par sections dans le boîtier de filtre (30),
**caractérisé en ce que**
le milieu filtrant (32) fait saillie sur le boîtier de filtre (30) dans la direction circonférentielle du disque de frein (12) et s'appuie de manière étanche contre l'ensemble étrier de frein (20).

2. Agencement de frein à disque (10) selon la revendication 1, **caractérisé en ce que** le milieu filtrant (32) s'appuie de manière chevauchante contre l'ensemble étrier de frein (20) dans la direction circonférentielle.

3. Agencement de frein à disque (10) selon une des revendications précédentes, **caractérisé en ce que** le milieu filtrant (32) s'appuie contre l'ensemble étrier de frein (20) sous une précontrainte élastique.

4. Agencement de frein à disque (10) selon une des revendications précédentes, **caractérisé en ce que** le milieu filtrant (32) est déformé plastiquement par l'appui contre l'ensemble étrier de frein (20).

5. Agencement de frein à disque (10) selon une des revendications précédentes, **caractérisé en ce que** le milieu filtrant (32) s'étend sur une section périphérique (34) d'une surface de revêtement (35) du disque de frein (12), dans lequel de préférence une paroi périphérique du boîtier de filtre (30) est revêtue au moins partiellement du milieu filtrant (32).

6. Agencement de frein à disque (10) selon une des revendications précédentes, **caractérisé en ce que** le milieu filtrant (32) s'étend sur le disque de frein (12), dans la direction radiale, de préférence des deux côtés, dans lequel de préférence des parois latérales du boîtier de filtre (30) opposées l'une à l'autre sont revêtues au moins partiellement du milieu filtrant (32).

7. Agencement de frein à disque (10) selon la revendication 5 ou 6, **caractérisé en ce que** le milieu filtrant (32) fait saillie sur un bord d'extrémité de la paroi périphérique en regard de l'ensemble étrier de frein (20) et/ou au moins d'une des parois latérales du boîtier de filtre (30).

8. Agencement de frein à disque (10) selon une des revendications précédentes, **caractérisé en ce que** le boîtier de filtre (30) a la forme d'un segment annulaire et comporte une zone de réception avec laquelle il entoure le disque de frein selon une zone d'angle prédéterminée, dans lequel la zone d'angle prédéterminée représente de préférence au moins 20°, plus préférablement au moins 30°, de manière la plus préférée au moins 40° de la périphérie du disque de frein.

9. Agencement de frein à disque (10) selon une des revendications précédentes, **caractérisé en ce que** l'ensemble étrier de frein (20) comporte un porte-étrier de frein (24) sur lequel l'étrier de frein (22) est maintenu, de préférence de manière déplaçable dans la direction axiale, dans lequel le milieu filtrant (32) s'appuie en particulier contre le porte-étrier de frein (24) .

10. Agencement de frein à disque (10) selon une des revendications précédentes, **caractérisé en ce que** le milieu filtrant (32) s'appuie contre l'étrier de frein (22) .

11. Agencement de frein à disque (10) selon une des revendications précédentes, **caractérisé en ce que** le disque de frein (12) est un disque de frein (12) à ventilation interne.

12. Agencement de frein à disque (10) selon une des revendications précédentes, **caractérisé en ce que** le boîtier de filtre (30) comporte au moins un orifice de ventilation (38), de préférence dans lequel l'au moins un orifice de ventilation (38) ouvre le boîtier de filtre (30) dans la direction radiale, dans lequel l'au moins un orifice de ventilation (38) est recouvert en particulier par le milieu filtrant (32).

13. Filtre à particules de poussière de frein (28) pour un agencement de frein à disque (10) selon une des revendications précédentes, comportant un boîtier de filtre (30) et un milieu filtrant (32) disposé par sections dans le boîtier de filtre (30), **caractérisé en ce que** le milieu filtrant (32) fait saillie sur le boîtier de filtre (30) dans la direction circonférentielle.

14. Filtre à particules de poussière de frein (28) selon la revendication 13, **caractérisé en ce que** le milieu filtrant (32) comporte ou est composé d'un non-tissé de fibres métalliques, d'un non-tissé de fibres de verre et/ou d'un non-tissé de fibres céramiques.

15. Filtre à particules de poussière de frein (28) selon la revendication 13 ou 14, **caractérisé en ce que** le milieu filtrant (32) fait saillie sur boîtier de filtre (30) d'au moins 3 mm, de préférence d'au moins 10 mm, particulièrement préférablement d'au moins 15 mm, dans la direction circonférentielle.
